**Europäisches Patentamt**

**European Patent Office**

**Office européen des brevets**

(19)

(11) Veröffentlichungsnummer: **0 075 687**
**A2**

(12) # EUROPÄISCHE PATENTANMELDUNG

(21) Anmeldenummer: **82107212.1**

(22) Anmeldetag: **10.08.82**

(51) Int. Cl.³: **B 01 D 35/00**

(30) Priorität: **25.09.81 DE 3138256**

(43) Veröffentlichungstag der Anmeldung:
**06.04.83 Patentblatt 83/14**

(84) Benannte Vertragsstaaten:
**BE DE FR GB NL**

(71) Anmelder: **Carl Schleicher & Schüll GmbH & Co. KG**
**Grimsehlstrasse 23**
**D-3352 Einbeck(DE)**

(72) Erfinder: **Hein, Wolfgang, Dr.**
**Hahnestrasse 9**
**D-3354 Dassel(DE)**

(74) Vertreter: **Jaeger, Klaus Dr. et al,**
**JAEGER & PARTNER Patentanwälte Bergstrasse 48 1/2**
**D-8035 München-Gauting(DE)**

(54) **Vakuumfiltrationsbank.**

(57) Die Vakuumfiltrationsbank ist ein Gerät zur unabhängigen gleichzeitigen Durchführung mehrerer Vakuumfiltrationen unter Beaufschlagung durch eine einzige Vakuumquelle und ist insbesondere zum Einsatz bei Routineuntersuchungen bestimmt. Die Vakuumfiltrationsbank besteht im wesentlichen aus einem liegend angeordneten quaderförmigen Stativrahmen, mit dem eine Vakuumverteilerleitung fest verbunden ist. Von der Vakuumverteilerleitung zweigen absperrbare Vakuumzweigleitungen ab, die je eine in Öffnungen des Stativrahmens gehaltene Saugflasche beaufschlagen. Durch Reduzierringsätze können Saugflaschen unterschiedlichen Durchmessers im Stativrahmen gehaltert werden. Im Gegensatz zu bekannten Vakuumfiltrationsbänken ermöglicht eine Vakuumfiltrationsbank mit Saugflaschen das separate Auffangen und Weiterverarbeiten der Filtrate, ohne die Vorteile der bekannten Vakuumfiltrationsbänke aufzugeben.

FIG.2

EP 0 075 687 A2

Beschreibung

Die Erfindung betrifft eine Vakuumfiltrationsbank der im Oberbegriff des Patentanspruchs 1 genannten Art.

Eine "Vakuumfiltrationsbank" im Sinne der Erfindung ist eine Vorrichtung, die bestimmungsgemäß zwischen den Anschlußstutzen einer Vakuumquelle und einen Filter eingefügt ist und generell der Beaufschlagung des Filters mit Unterdruck und der Aufnahme des Filtrats dient. Ein "Filtrationsgerät" in dem im Rahmen der Erfindung benutzten Sinne besteht zumindest aus einem Filter und besteht üblicherweise aus einer Filterunterstützung, einem Filter und einem mit diesen beiden Elementen eine Einheit bildenden Aufgußgefäß. Das solcherart definierte separate Filtrationsgerät wird nicht mehr als Bestandteil der Vakuumfiltrationsbank im Sinne der Erfindung betrachtet. Die Filtrationsgeräte können prinzipiell solange beliebiger Art sein, wie sie in der Weise mit der Vakuumfiltrationsbank verbindbar sind, daß sie über diese mit einem der Durchführung der Vakuumfiltration dienenden Unterdruck beaufschlagbar sind. Filtrationsgeräte in diesem Sinne sind also beispielsweise trichterartige oder becherartige offene oder geschlossene Filter oder Filteraufsätze für den Betrieb mit Papierfiltern, Membranfiltern oder Filtern aus Sintermaterial.

Vakuumfiltrationsbänke der eingangs genannten Art gehören in den vielfältigsten Ausbildungen zum gebräuchlichen Stand der Technik und dienen insbesondere der gleichzeitigen Vakuumfiltration mehrerer Flüssigkeitsproben bei der Durchführung von Reihenuntersuchungen, insbesondere in der Produktionsqualitätsüberwachung, in der Partikelkontrolle, zur mikrobiologischen Routinekontrolle von Wasser, Lebensmitteln und Getränken sowie zur Qualitätsüberwachung von pharmazeutischen und kosmetischen Produkten (vgl. beispielsweise den Prospekt "Vakuumfiltrationsgeräte" der Anmelderin, Ausgabe Dezember 1980).

Eine gebräuchliche Vakuumfiltrationsbank der genannten Art besteht im wesentlichen aus einem zentralen Absaugrohr, das mit zwei querliegenden Stativplatten unter Bildung einer stabilen Bank fest verbunden ist. Das im wesentlichen horizontal angeordnete zentrale Absaugrohr ist auf einer Seite vakuumdicht verschlossen und weist auf seiner gegenüberliegenden Seite einen Anschlußstutzen zur Herstellung einer Verbindung zu einer Vakuumquelle auf. Von diesem horizontalen Absaugrohr zweigen radial senkrecht nach oben Abzweigstutzen ab, in die ein Absperrhahn eingeschaltet ist und die an ihrem oberen Ende so ausgebildet sind, daß sie den Anschluß eines separaten Filtrationsgerätes der oben definierten Art ermöglichen. Üblicherweise sind ungefähr zwei bis zehn Filtrationsgeräte auf einer solchen Vakuumfiltrationsbank gleichzeitig einsetzbar.

Auf Grund ihrer übersichtlichen und bequemen Zugänglichkeit, ihrer großen Standfestigkeit, ihres geringen Raumbedarfs und ihrer nur geringen Einschränkung der Bewegungsfreiheit am Arbeitsplatz bringen solche Vakuumfiltrationsbänke insbesondere an Routineuntersuchungsplätzen eine wesentliche Arbeitserleichterung mit sich. Nachteilig an diesen Vakuumfiltrationsbänken ist jedoch, daß die Filtrate im zentralen Absaugrohr abgesaugt werden und dadurch verlorengehen.

Zur Vermeidung dieses Nachteils ist für Forschungsanwendungen eine Vakuumfiltrationsbank entwickelt worden (vgl. ebenfalls den vorstehend genannten Prospekt der Anmelderin), die nach Art eines Mehrfach-Saugtopfes ausgebildet ist. In einem topfartigen Unterteil, das über einen Anschlußstutzen mit einer Vakuumquelle verbindbar ist, stehen zehn separate Filtratauffanggefäße. Der Topf ist mit einem Deckel verschließbar, auf den die separaten Filtrationsgefäße aufsetzbar sind und aus denen das abgesaugte Filtrat in die Auffanggefäße abtropft. Nachteil dieser Vorrichtung ist vor allem, daß die Filtrationen nicht unabhängig voneinander, sondern nur gleichzeitig durchgeführt werden können. Nachteilig ist weiterhin, daß die Gefahr einer Filtratvermischung besteht, und zwar sowohl durch Versprühen und Verspritzen des Filtrats als auch über die Dampfphase.

Ausgehend von diesem Stand der Technik liegt der Erfindung die Aufgabe zugrunde, eine Vakuumfiltrationsbank der eingangs genannten Art dahingehend zu verbessern, daß unter Beibehaltung der Standfestigkeit, Übersichtlichkeit und Kompaktheit der Vorrichtung sowie unter Beibehaltung des wesentlichen Merkmals eines einzigen zentralen Anschlußstücks zur Verbindung der Vorrichtung mit einer Vakuumquelle und unter Beibehaltung des von Filtrationsgerät zu Filtrationsgerät unabhängigen Betriebes ein sauberes und separates Auffangen des Filtrats ermöglicht wird.

Zur Lösung dieser Aufgabe weist eine Vakuumfiltrationsbank der im Oberbegriff des Patentanspruchs 1 genannten Art gemäß der Erfindung die im kennzeichnenden Teil des Anspruchs 1 genannten Merkmale auf.

Der Grundgedanke der Erfindung liegt also darin, zur Lösung der vorstehend genannten Aufgabe auf die Verwendung gebräuchlicher Saugflaschen zurückzugreifen, diese jedoch in einem einzigen Stativblock zu einer als Einheit handhabbaren Batterie zusammenzufassen, in der eine zentrale Vakuumverteilerleitung integriert ist, so daß die gesamte Saugflaschenbatterie nur über eine einzige Anschlußleitung mit der Vakuumquelle verbunden zu werden braucht. Dabei gewährleistet die Absperrbarkeit jeder einzelnen Zweigleitung vor dem Anschluß an die Saugflasche, daß das Filtrat aus jeder beliebigen einzelnen Saugflasche gesammelt und aufbereitet werden kann, ohne daß dazu in einem der anderen Filtrationsgeräte der Vakuumfiltrationsbank der Filtrationsvorgang unterbrochen zu werden braucht.

Zur Stabilisierung der Standfestigkeit der Saugflasche in dem quaderförmigen Stativrahmen weist dieser vorzugsweise einen zur Bodenplatte und Oberseite oder Deckplatte parallelen Zwischenboden auf, in dem konzentrisch und flächendeckungsgleich zu jeder der Öffnungen in der Oberseite des Stativrahmens weitere Öffnungen ausgebildet sind. Vorzugsweise weisen alle Öffnungen des Stativrahmens gleiche Abmessungen auf und sind insbesondere kreisrunde Öffnungen mit gleichem Durchmesser. Um bei dieser Ausbildung des Stativrahmens auch unterschiedlich dimensionierte Saugflaschen einsetzen zu können, ist die Vakuumfiltrationsbank vorzugsweise mit Reduzierringsätzen versehen, die eine schrittweise Verringerung des lichten Durchmessers der Öffnungen ermöglichen, und zwar insbesondere in gleicher Weise der Öffnungen in der Oberseite und gegebenenfalls im Zwischenboden des Stativrahmens. Jeder dieser Reduzierringe hat im wesentlichen die Form eines relativ dickwandigen Zylinderringes, der an seinem oberen Rand einen Außenflansch trägt. Mit diesem Außenflansch liegt jeder der Reduzierringe entweder auf der Oberfläche der Oberseite des Stativrahmens oder auf der Oberseite des Außenflansches eines radial außen umschließenden Reduzierringes auf. Insbesondere weisen vorzugsweise sämtliche Reduzierringe eines Satzes Außenflansche mit ein und demselben Außendurchmesser auf.

Nach einer Ausgestaltung der Erfindung ist die Vakuumverteilerleitung vorzugsweise eine Rohrleitung, insbesondere freitragende formstabile Rohrleitung, die außerhalb des Stativrahmens geführt und an seitlichen Verlängerungen oder Vorsprüngen der Seitenwände des Stativrahmens gehaltert ist.
Die Halterung ist vorzugsweise als lösbare Halterung, insbesondere als Steckverbindung ausgebildet. Dies ermöglicht
eine gute Zugänglichkeit der Vakuumverteilerleitung zu Reinigungs- und Wartungszwecken.

Zur flexibleren Handhabung der Vakuumfiltrationsbank ist
nach einer Ausgestaltung der Erfindung vorzugsweise auch
zwischen der Saugflasche und dem Filtrationsgerät ein Absperrhahn eingeschaltet. Dabei können sowohl dieser Absperrhahn als auch der Absperrhahn in der Vakuumzweigleitung als
Dreiwegehahn ausgebildet sein, über den die Vakuumflasche
bei abgesperrter Vakuumzweigleitung und gegebenenfalls zusätzlich abgesperrter Filtratzulaufleitung belüftet werden
kann. Alternativ kann die Saugflasche jedoch auch über einen
separaten Absperrhahn direkt belüftet werden.

Der Stativrahmen, die Vakuumverteilerleitung und die Absperrhähne bestehen vorzugsweise aus Kunststoff. Die Vakuumzweigleitung ist insbesondere flexibel, beispielsweise als Vakuumgummischlauch, ausgebildet.

Optimal ist jede Vakuumfiltrationsbank gemäß der Erfindung
mit zwei bis zehn Filtrationsstationen ausgestattet.

Die Erfindung ist im folgenden an Hand von Ausführungsbeispielen in Verbindung mit den Zeichnungen näher erläutert.
Es zeigen:

Fig. 1    in schematischer Darstellung und in Draufsicht ein erstes Ausführungsbeispiel der Erfindung;

Fig. 2    einen Schnitt nach II-II in Fig. 1; und

Fig. 3     ein zweites Ausführungsbeispiel in einem
           der Darstellung in Fig. 2 entsprechenden
           Schnitt.

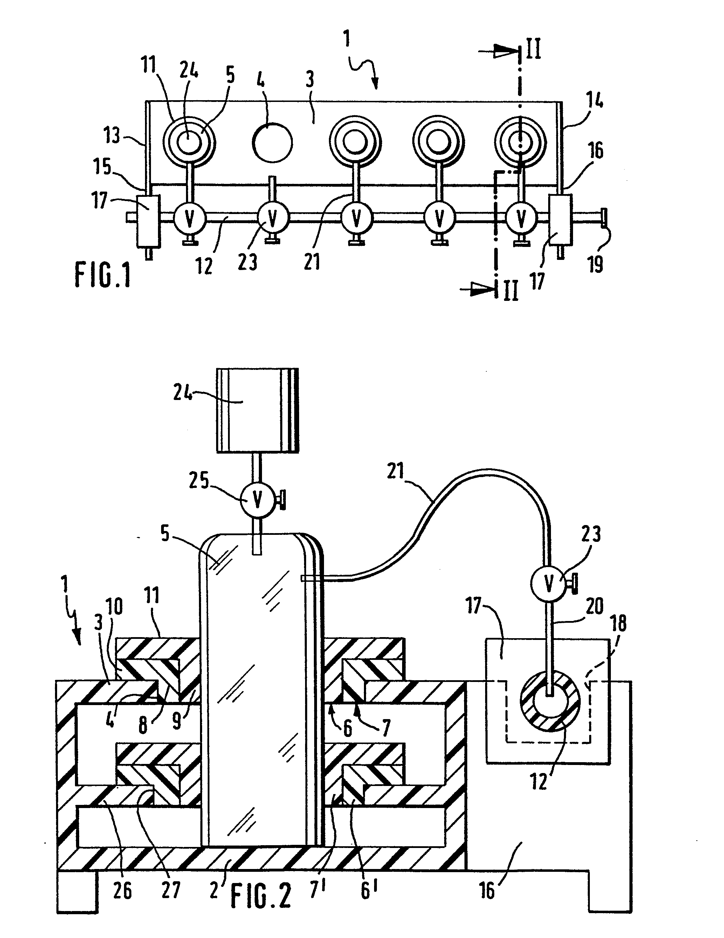

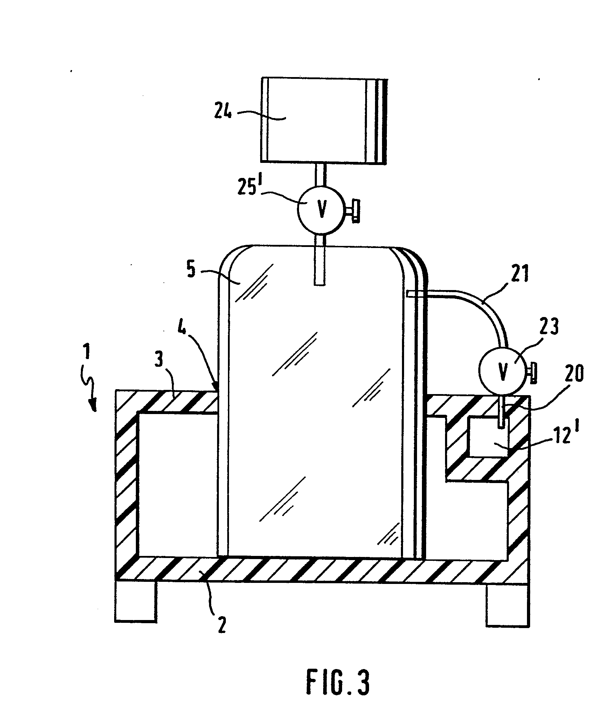

Ein erstes Ausführungsbeispiel der Vakuumfiltrationsbank
ist in der Fig. 1 schematisch in Draufsicht dargestellt. Die
Fig. 2 zeigt einen Schnitt nach II-II in Fig. 1, ebenfalls
in schematischer Darstellung. Die in den Figuren 1 und 2 gezeigte Vakuumfiltrationsbank besteht im wesentlichen aus einem
liegend angeordneten und zumindest im wesentlichen quaderförmigen Stativrahmen 1 mit geschlossenem Boden 2. In der dem Boden 2 gegenüberliegenden Oberseite 3 sind mehrere Öffnungen 4,
in dem hier gezeigten Ausführungsbeispiel insgesamt fünf Öffnungen, nebeneinanderliegend ausgebildet. In jeder der Öffnungen 4 steht jeweils eine Saugflasche 5, die mit ihrem Boden
auf dem Boden 2 des Stativrahmens 1 aufsteht. Der Innenrand
der Öffnung 4 umschließt die Saugflasche 5 paßgenau (Fig. 3),
um deren Stand zu stabilisieren. Im Fall von beispielsweise
zylindrischen Saugflaschen 5 muß dabei der Durchmesser der
Öffnungen 4 selbstverständlich so gewählt werden, daß er dem
fertigungsbedingten Durchmessertoleranzbereich der Saugflaschen Rechnung trägt. Selbstverständlich kann der Innenrand
der Öffnung 4 auch mit einem elastisch verformbaren Werkstoff
ausgekleidet sein, beispielsweise einer Lippendichtung oder
einer Klemmwulst, oder mit Federelementen ausgestattet sein,
so daß auch innerhalb von Toleranzbereichen die eingesetzten
Saugflaschen stets federnd oder klemmend ergriffen und gehaltert werden. Alle fünf Öffnungen 4 in der Oberseite 3 des Stativrahmens 1 weisen den gleichen Durchmesser auf.

Um in den relativ großen  Einsatzöffnungen 4 auch Saugflaschen mit kleinerem Durchmesser sicher und fest stabilisieren und haltern zu können, ist für jede Öffnung 4 ein jeweils
nach Bedarf einsetzbarer Satz von Reduzierringen 6,7 (Fig. 2) vorgesehen, mit dem der lichte Durchmesser der Öffnung 4 reduziert werden kann. Jeder der Reduzierringe 6,7 hat im wesentlichen die Form eines relativ dickwandigen flachen Zylinderringes 8 bzw. 9, an dessen oberem Rand ein kreisringförmiger Außenflansch 10 bzw. 11 angeformt ist. Der Außenrand des zylindrischen Teils 8 des größten Reduzierringes 6 des Satzes liegt paßgenau am Innenrand der Öffnung 4 in der Oberseite 3 des Stativrahmens 1 an. Dabei liegt der Außenflansch 10 des Reduzierringes 6 auf der Oberfläche der Oberseite 3 des Stativrahmens 1 auf und hält so den gesamten Reduzierring 6 in der Öffnung. Der innere Reduzierring 7 ist in gleicher Weise ausgebildet und liegt mit dem Außenmantel seines zylindrischen Abschnitts 9 am Innenmantel des äußeren Reduzierringes 6 paßgenau an. Der innere Reduzierring 7 ist mit seinem Außenflansch 11 auf der Oberfläche des Außenflansches 10 des äußeren Reduzierringes 6 abgestützt. Der Außenflansch 10 des äußeren Reduzierringes 6 und der Außenflansch 11 des inneren Reduzierringes 7 weisen den gleichen Außendurchmesser auf.

Die Vakuumfiltrationsbank enthält weiterhin als integrierten Bestandteil, der fest mit dem Stativrahmen 1 verbunden ist, eine Vakuumverteilerleitung 12. In dem in den Figuren 1 und 2 gezeigten Ausführungsbeispiel ist die Vakuumverteilerleitung 12 außerhalb des Stativrahmens 1 an seitlichen Verlängerungen 15 bzw. 16 der Seitenwände 13 bzs. 14 des Stativrahmens 1 befestigt. Die Befestigung ist als lösbare Klemmverbindung bzw. Steckverbindung ausgebildet. Ein mit einer umlaufenden Randnut versehener Steckblock 17 ist auf jeder Seite fest mit der als starres Rohr ausgebildeten Vakuumverteilerleitung 12 verbunden und in eine Ausnehmung 18 der Verlängerung 16 der Seitenwand 14 bzw. in eine entsprechende in den Figuren nicht dargestellte Ausnehmung in der Verlängerung 15 der Seitenwand 13 eingesteckt, deren Rand nach Art einer Feder in die Randnut des Steckblocks 17 eingreift.

Bei dem in der Fig. 3 gezeigten Ausführungsbeispiel ist dagegen die Vakuumverteilerleitung 12' als einstückig angeformter Bestandteil des Stativrahmens 1 innenliegend ausgebildet.

Die Vakuumverteilerleitung 12' (Fig. 3) ist ebenso wie die
Vakuumverteilerleitung 12 (Figuren 1 und 2) einseitig geschlossen ausgebildet. An dem gegenüberliegenden Ende ist
ein Anschluß 19 für eine in den Figuren nicht dargestellte
Vakuumquelle vorgesehen. Dieser Anschluß kann prinzipiell beliebiger Art sein, beispielsweise eine Flanschverbindung,
eine Steckverbindung oder eine Schraubverbindung, und ist
an sich nicht erfindungswesentlich.

Von der Vakuumverteilerleitung 12 bzw. 12' zweigen Vakuumzweigleitungen 20,21 ab, in die jeweils ein Absperrhahn 23
eingeschaltet ist und die mit einem flexiblen Abschnitt 21,
hier ein Vakuumschlauch aus Gummi, die Vakuumverbindung von
der Vakuumverteilerleitung 12 bzw. 12' zur Saugflasche 5 herstellen. Mit jeder der Saugflaschen 5 kann ein separates Filtrationsgerät 24 verbunden werden. Zwischen das Filtrationsgerät 24 und die Saugflasche 5 ist ein Absperrhahn 25 eingeschaltet. In dem in Fig. 3 gezeigten Ausführungsbeispiel ist
der Absperrhahn 25' als Dreiwegehahn ausgebildet, der eine
Belüftung der Saugflasche 5 ermöglicht. Statt dessen oder zusätzlich kann selbstverständlich auch der Absperrhahn 23 in
der Vakuumzweigleitung 20,21 als Dreiwegehahn ausgebildet sein.

In der aus Fig. 2 ersichtlichen Weise ist im Stativrahmen 1
zwischen dessen Oberseite 3 und dessen Boden 2 ein horizontaler fester Zwischenboden 26 angeordnet. Dieser Zwischenboden 26
weist konzentrisch zu jeder der Öffnungen 4 in der Oberseite 3
des Stativrahmens 1 Öffnungen 27 auf, die jeweils den identischen Querschnitt wie die Öffnungen 4 in der Oberseite 3 des
Stativrahmens 1 haben. Sind in die Öffnung 4 der Oberseite 3
ein oder mehrere Reduzierringe 6,7 eingesetzt, so sind entsprechende Ringe 6',7' vorzugsweise auch in die jeweils entsprechende Öffnung 27 des Zwischenbodens 26 eingesetzt, wodurch ein Maximum der Stabilisierung nicht nur der einzelnen Saugflasche 5, sondern des Gesamtsystems der Vakuumfiltrationsbank erhalten wird.

Der Stativrahmen 1 mit allen seinen Teilen, die Reduzierringe 6,7, die Vakuumverteilerleitung 12 mit allen ihren Teilen und die Hähne 23 und 25 bestehen vorzugsweise aus Kunststoff. Die Saugflasche 5 besteht vorzugsweise aus Glas. Die Ausbildung der nicht zur Vakuumfiltrationsbank gerechneten separaten Filtrationsgeräte 24 ist prinzipiell beliebiger Art.

# JAEGER, GRAMS & PONTANI    0075687
### PATENTANWÄLTE

DIPL.CHEM. DR. KLAUS JAEGER
8035 GAUTING · BERGSTR. 48½

DIPL.-ING. KLAUS D. GRAMS
8031 STOCKDORF · KREUZWEG 34

DR.-ING. HANS H. PONTANI
8752 KLEINOSTHEIM · HIRSCHPFAD 3

SLS-53-EP

Carl Schleicher & Schüll GmbH & Co. KG,
Grimsehlstraße 23, 3352  Einbeck

---

Vakuumfiltrationsbank

---

## P a t e n t a n s p r ü c h e

1. Vakuumfiltrationsbank für die Vakuumfiltration einer
Fluidprobe oder für die voneinander unabhängige und
bei Bedarf auch gleichzeitige Vakuumfiltration mehrerer Fluidproben mit separaten Filtrationsgeräten, wobei
die Vakuumfiltrationsbank eine mit dieser fest verbundene Vakuumverteilerleitung (12;12') enthält, die ein Anschlußstück (19) zum Verbinden mit einer Vakuumquelle
aufweist und von der für jedes auf der Vakuumfiltrationsbank mit Vakuum beaufschlagbare Filtrationsgerät (24)
eine mit einem Absperrhahn (23) versehene Vakuumzweigleitung (20,21) abzweigt,
g e k e n n z e i c h n e t   durch

(a) einen liegend angeordneten und zumindest im wesentlichen quaderförmigen Stativrahmen (1) mit geschlossenem Boden (2),

(b) eine oder mehrere Öffnungen (4) in der dem Boden (2)
gegenüberliegenden Oberseite (3) des Stativrahmens (1),
die jeweils eine auf dem Boden (2) des Stativrahmens (1)
aufstehende Saugflasche (5) paßgenau umschließen und

(c) eine Vakuumverbindung zwischen dem Vakuumanschluß
jeder der Saugflaschen (5) und einer der Vakuumzweigleitungen (20,21).

2. Vakuumfiltrationsbank nach Anspruch 1,
dadurch g e k e n n z e i c h n e t ,
daß bei Ausbildung mehrerer Öffnungen (4) in der Oberseite (3) des Stativrahmens (1) alle Öffnungen (4) die gleichen Abmessungen aufweisen.

3. Vakuumfiltrationsbank nach einem der Ansprüche 1 oder 2,
dadurch g e k e n n z e i c h n e t ,
daß zwischen dem Boden (2) und der Oberseite (3) des Stativrahmens (1) ein horizontaler fester Zwischenboden (26)
angeordnet ist, der konzentrisch zu jeder Öffnung (4) in
der Oberseite (3) des Stativrahmens (1) eine Öffnung (27)
mit identischem Querschnitt aufweist.

4. Vakuumfiltrationsbank nach einem der Ansprüche 1 bis 3,
g e k e n n z e i c h n e t durch
mindestens einen aus mindestens einem Ring bestehenden
Satz (6,7) Reduzierringe (6;7), von denen mindestens jeweils ein Reduzierring (6;6') paßgenau in die Öffnung (4;27)

in der Oberseite (3) und/oder im Zwischenboden (26)
des Stativrahmens (1) zur Reduzierung des lichten Querschnittes der Öffnung (4;27) eingesetzt ist.


5.  Vakuumfiltrationsbank nach Anspruch 4,
    dadurch   g e k e n n z e i c h n e t   ,
    daß jeder der Reduzierringe (6;7) ein Zylinderring (8;9)
    ist, der an seinem oberen Rand einen Außenflansch (10;11)
    trägt.


6.  Vakuumfiltrationsbank nach einem der Ansprüche 1 bis 5,
    dadurch   g e k e n n z e i c h n e t   ,
    daß die Vakuumverteilerleitung eine Rohrleitung (12) ist,
    die an seitlichen Verlängerungen (15,16) oder Vorsprüngen
    der Seitenwände (13,14) des Stativrahmens (1) außerhalb
    des Stativrahmens gehaltert ist.


7.  Vakuumfiltrationsbank nach einem der Ansprüche 1 bis 6,
    dadurch   g e k e n n z e i c h n e t   ,
    daß die feste Halterung der Vakuumverteilerleitung (12)
    an dem Stativrahmen (1) als lösbare Verbindung (17,18),
    insbesondere Steckverbindung, ausgebildet ist und daß die
    Vakuumzweigleitungen (20,21) zumindest teilweise flexibel (21)
    sind.


8.  Vakuumfiltrationsbank nach einem der Ansprüche 1 bis 7,
    g e k e n n z e i c h n e t   durch
    einen Absperrhahn (25;25') zwischen der Saugflasche (5)
    und dem Filtrationsgerät (24).

9. Vakuumfiltrationsbank nach einem der Ansprüche 1 bis 8,
   dadurch  g e k e n n z e i c h n e t ,
   daß der Absperrhahn (23) in der Vakuumzweigleitung (20,21)
   und/oder der Absperrhahn (25) zwischen der Saugflasche (5)
   und dem Filtrationsgerät (24) als Dreiwegehahn (25') ausgebildet ist, über den die Saugflasche (5) wahlweise
   (a) mit der Vakuumverteilerleitung (12) bzw. mit dem
   Filtrationsgerät (24) oder (b) mit der Umgebungsatmosphäre verbindbar oder (c) absperrbar ist.

FIG.1

FIG.2

0075687

1/2

FIG.3